# EUROPEAN PATENT SPECIFICATION

(11) **EP 3 719 911 B1**
(45) Date of publication and mention of the grant of the patent: **24.07.2024**
(21) Application number: 19793654.5
(22) Date of filing: 29.04.2019
(51) Int. Cl.: C08J 5/20, H01M 10/052, H01M 10/0525, H01M 10/0565, H01M 4/36, H01M 4/62

(54) **LITHIUM SECONDARY BATTERY AND MANUFACTURING METHOD THEREOF**
LITHIUMSEKUNDÄRBATTERIE UND HERSTELLUNGSVERFAHREN DAFÜR
BATTERIE SECONDAIRE AU LITHIUM ET SON PROCÉDÉ DE FABRICATION

(30) Priority: 27.04.2018 KR 20180049373; 27.04.2018 KR 20180049374
(43) Date of publication of application: 07.10.2020
(60) Divisional application: 24181933.3
(73) Proprietor: LG Energy Solution, Ltd., Seoul 07335 (KR)
(72) Inventor: SHIN, Won Kyung, Daejeon 34122 (KR); AHN, Kyoung Ho, Daejeon 34122 (KR); LEE, Chul Haeng, Daejeon 34122 (KR)
(74) Representative: Hoffmann Eitle
(86) International application number: PCT/KR2019/005149
(87) International publication number: WO 2019/209089

(56) References cited:
- EP-A1- 3 761 431
- EP-A2- 0 915 526
- JP-A- 2002 279 826
- JP-A- 2011 049 046
- JP-A- 2015 056 402
- KR-A- 20060 042 326
- KR-B1- 100 960 779
- US-A1- 2008 070 116
- US-A1- 2015 072 244

## Description

### Technical Field

The present invention relates to a lithium secondary battery, and more specifically, to a lithium secondary battery using a gel polymer electrolyte and a manufacturing method thereof.

### BACKGROUND ART

In recent years, due to the growing interest in environmental issues, there have been many studies conducted on electric vehicles (EV) and hybrid electric vehicles (HEV) which can replace vehicles that use fossil fuels, such as gasoline vehicles and diesel vehicles, which are one of the main causes of air pollution.

Such electric vehicles (EV), hybrid electric vehicles (HEV), and the like use, as a power source thereof, a nickel metal hydride (Ni-MH) secondary battery, or a lithium secondary battery of high energy density, high discharge voltage and output stability. Particularly, when the lithium secondary battery is used in an electric vehicle, significantly superior energy density, safety and long-term life properties to those of a conventional small lithium secondary battery are inevitably required in addition to high energy density and properties capable of producing a large output in a short time, since the battery must be used for more than 10 years under harsh conditions.

In general, a lithium secondary battery is manufactured by using a negative electrode (anode), a positive electrode (cathode), a separator interposed therebetween, and an electrolyte which is a transfer medium of lithium ions. In a typical secondary battery, a liquid electrolyte, particularly, an ionic conductive organic liquid electrolyte in which a salt is dissolved in a non-aqueous organic solvent has been mainly used.

However, when a liquid electrolyte is used as described above, there are significant possibilities in that an electrode material is degenerated and an organic solvent is volatilized. In addition, there are safety issues such as combustion due to the temperature rise in a battery itself and the surroundings thereof. In particular, the lithium secondary battery has a problem in that the thickness of a battery is increased, during charging/discharging, due to the generation of gas inside the battery caused by the decomposition of a carbonate organic solvent and/or a side reaction between the organic solvent and an electrode. As a result, the deterioration in the performance and safety of the battery is inevitable.

In general, it is known that battery safety improves in the order of a liquid electrolyte, a gel polymer electrolyte, and a solid polymer electrolyte, but battery performance decreases in the same order. The solid polymer electrolyte has been known to have low battery performance, and thus, is not commercially available. Therefore, in recent years, a gel polymer electrolyte having excellent battery safety and maintaining battery performance above a predetermined level has been widely used.

In the case of a secondary battery using a conventional liquid electrolyte, the adhesion between an electrode and the electrolyte does not cause a problem. However, when a gel polymer electrolyte is used, problems such as interface resistance properties and an electrode short-circuit phenomenon may occur depending on the adhesion to an electrode. Accordingly, there is a need for the development of a lithium secondary battery having excellent adhesion between a gel polymer electrolyte and an electrode, thereby improving the safety and resistance properties of a battery.
(Patent Document 1) Korean Patent Laid-Open Publication No. 10-2001-0022160.

US-A-2015/072244 teaches a lithium ion battery comprising a gel polymer electrolyte, a cathode, an anode and a separator between the cathode and the anode, wherein the gel polymer electrolyte includes a lithium salt, a non-aqueous solvent and a polymer monomer which includes at least one epoxy monomer containing an epoxy group and a double bond and at least one acrylate monomer, and an anode binder includes a polymer having an amino group or imino group on the main chain or a branched chain thereof.

US-A-2008/070116 teaches a lithium secondary battery including a current collector, a cathode and an anode each having an active material layer formed on the current collector, and a polymer electrolyte interposed between the cathode and the anode. A fluorine resin film is formed on at least one surface of the active material layers of the cathode and anode. A fluorine resin exists in pores between constituents contained in at least one active material layer of the cathode and anode. The polymer electrolyte is a polymerized product of a crosslinking monomer and an electrolytic solution including a lithium salt and an organic solvent. Also, a porous membrane made of an insulating resin is interposed between the cathode and the anode.

EP-A-0915526 teaches a solid electrolyte cell comprising an electrode having a current collector and a layer of an active material formed on said current collector and containing an active material and a binder. The solid electrolyte layer is formed by impregnating a solid electrolyte dissolved in a solvent on said layer of the active material. The solid electrolyte contains a high-molecular matrix material and is in a gelated state.

### DISCLOSURE OF THE INVENTION

### TECHNICAL PROBLEM

An aspect of the present invention provides a lithium secondary battery capable of increasing the adhesion between a gel polymer electrolyte and an electrode, thereby improving the performance and safety of a battery, and a manufacturing method thereof.

### TECHNICAL SOLUTION

According to a first aspect, the present invention provides a lithium secondary battery comprising:
a positive electrode, a negative electrode, and a separator interposed between the positive electrode and the negative electrode; and
a gel polymer electrolyte formed by polymerizing an oligomer,
wherein:
   (i) the positive and/or the negative electrode includes an electrode current collector, an electrode active material layer formed on the electrode current collector, and a coating layer formed on the electrode active material layer including a binder bonded to the gel polymer electrolyte, and
   (ii) the oligomer and the binder comprise an epoxy group, a functional group capable of ring-opening reaction with an epoxy group, or a combination thereof, the functional group being at least one of a hydroxyl group (-OH), a carboxylic acid group (-COOH), an amine group, an isocyanate group, a mercaptan group and an imide group.

According to a second aspect, the present invention provides a method for manufacturing a lithium secondary battery comprising:
inserting, into a battery case, an electrode assembly composed of a positive electrode, a negative electrode, and a separator interposed between the positive electrode and the negative electrode;
injecting a gel polymer electrolyte composition including a polymerizable oligomer into the battery case, the oligomer including an epoxy group, a functional group capable of ring-opening reaction with an epoxy group, or a combination thereof, the gel polymer electrolyte composition not comprising a polymerization initiator; and
polymerizing the gel polymer electrolyte,
wherein the positive and/or the negative electrode includes an electrode current collector, an electrode active material layer formed on the electrode current collector, and a coating layer formed on the electrode active material layer and including a binder which bonds with the gel polymer electrolyte during the polymerisation of the latter.

### ADVANTAGEOUS EFFECTS

A lithium secondary battery according to the present invention improves the adhesion between an electrode and a gel polymer electrolyte, so that the gel polymer electrolyte may be uniformly formed on the surface of the electrode, and accordingly, the electrode interface resistance is reduced and the high-temperature properties of a battery is improved.

### BEST MODE FOR CARRYING OUT THE INVENTION

Hereinafter, the present invention will be described in more detail.

It will be understood that words or terms used in the specification and claims shall not be interpreted as having the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular exemplary embodiments only and is not intended to be limiting of the present invention. The terms of a singular form may include plural forms unless the context clearly indicates otherwise.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

Meanwhile, unless otherwise specified in the present invention, the "*" symbol refers to a portion connected between ends of the same or different atoms or chemical formulas.

In addition, in the present invention, a weight average molecular weight (Mw) may be measured by Gel Permeation Chromatography (GPC). For example, a sample specimen of a predetermined concentration is prepared, and a GPC measurement system Alliance 4 device is stabilized. When the device is stabilized, a standard specimen and the sample specimen are injected into the device to obtain a chromatogram, and a molecular weight is calculated according to an analysis method (System: Alliance 4, column: Ultrahydrogel linear X 2, eluent: 0.1 M NaNO₃ (pH 7.0 phosphate buffer, flow rate: 0.1 mL/min, temp: 40°C, injection: 100 µL)

### <Lithium secondary battery>

A lithium secondary battery according to the present invention will be described. A lithium secondary battery using a conventional non-aqueous electrolyte does not have a problem in that the performance of a battery is deteriorated according to the adhesion between the electrolyte and an electrode. However, a gel polymer electrolyte has problems in that a short circuit occurs in a battery, or the lifespan properties of the battery is deteriorated, when the adhesion between an electrode and the gel polymer electrolyte is low during curing. Accordingly, studies have been continued to improve the adhesion between an electrode and a gel polymer electrolyte.

Accordingly, the present inventors included a binder capable of participating in a polymerization reaction in an electrode active material layer when an oligomer contained in a composition for gel polymer electrolyte is polymerized, or coated the binder on the surface of the electrode active material layer while the oligomer is polymerized and cured, such that the binder also participates in the polymerization reaction to increase the adhesion between an electrode and a gel polymer electrolyte.

When the adhesion between the gel polymer electrolyte and the electrode is improved, it is possible not only to suppress the occurrence of an internal short circuit in a battery, but also to control the increase in electrode interface resistance, thereby improving the lifespan properties of the battery and improving the safety thereof.

Hereinafter, a binder included in a coating layer formed on an electrode active material layer is defined as a first binder.

Among embodiments of the present invention, a lithium secondary battery will be described in which a binder is included in a coating layer formed on an electrode active material layer. The lithium secondary battery includes a positive electrode, a negative electrode, and a separator interposed between the positive electrode and the negative electrode, and a gel polymer electrolyte formed by polymerizing an oligomer, wherein at least one electrode selected from the positive electrode and the negative electrode includes an electrode current collector, an electrode active material layer formed on the electrode current collector, and a coating layer formed on the electrode active material layer and including a first binder, and the first binder is bonded to the gel polymer electrolyte.

First, the electrode according to the present invention will be described.

The one or more electrodes selected from the positive electrode and the negative electrode includes (1) an electrode current collector (2) an electrode actively material layer formed on the electrode current collector, and (3) a coating layer formed on the electrode active material layer. At this time, the coating layer includes a first binder, and the first binder is bonded to a gel polymer electrolyte.

The electrode current collector is not particularly limited as long as it has conductivity without causing a chemical change in the battery. For example, stainless steel, copper, aluminum, nickel, titanium, fired carbon, or aluminum, copper, or stainless steel that is surface-treated with one of carbon, nickel, titanium, silver, and the like may be used. In addition, the electrode current collector may have microscopic irregularities formed on the surface thereof to improve the adhesion to the electrode active material layer, may be used in various forms of such as a film, a sheet, a foil, a net, a porous body, a foam body, and a non-woven fabric body, and may have a thickness of 3 um to 500 µm.

The electrode active material layer is formed on one surface or both surfaces of the electrode active material, and includes an electrode active material. At this time, the electrode active material may be a positive electrode active material or a negative electrode active material.

The positive electrode active material is a compound capable of reversible intercalation and de-intercalation of lithium, and specifically, may include a lithium composite metal oxide containing one or more metals such as cobalt, manganese, nickel or aluminum, and lithium. More specifically, the lithium composite metal oxide may be a lithium-manganese-based oxide (e.g., LiMnO₂, LiMn₂O₄, etc.), a lithium-cobalt-based oxide (e.g., LiCoO₂, etc.), a lithium-nickel-based oxide (e.g., LiNiO₂, etc.), a lithium-nickel-manganese-based oxide (e.g., LiNi_{1-Y1}Mn_{Y1}O₂ (wherein 0<Y1<1), LiMn_{2-z1}Ni_{z1}O₄ (wherein 0 < Z1 < 2), etc.), a lithium-nickel-cobalt-based oxide (e.g., LiNi_{1-Y2}Co_{Y2}O₂ (wherein 0<Y2<1), etc.), a lithium-manganese-cobalt-based oxide (e.g., LiCo_{1-Y3}Mn_{Y3}O₂ (wherein 0<Y3<1), LiMn_{2-z2}Co_{z2}O₄ (wherein 0<Z2<2), etc.), a lithium-nickel-manganese-cobalt-based oxide (e.g., Li(Niₚ₁Co_{q1}Mnᵣ₁)O₂ (wherein 0<p1<1, 0<q1<1, 0<r1<1, p1+q1+r1=1) or Li(Niₚ₂Co_{q2}Mnᵣ₂)O₄ (wherein 0<p2<2, 0<q2<2, 0 < r2<2, p2+q2+r2=2), etc.), or a lithium-nickel-cobalt-transition metal (M) oxide (e.g., Li(Niₚ₃Co_{q3}Mnᵣ₃M_{S1})O₂ (wherein M is selected from the group consisting of Al, Fe, V, Cr, Ti, Ta, Mg, and Mo, and p3, q3, r3, and s1 are each an atomic fraction of independent elements, wherein 0<p3<1, 0<q3<1, 0<r3<1, 0<s1<1, p3+q3+r3+s1=1) and the like, and any one thereof or a compound of two or more thereof may be included.

Among these, due to the fact that the capacity properties and stability of a battery may be increased, the lithium composite metal oxide may be LiCoO₂, LiMnO₂, LiNiO₂, a lithium nickel-manganese-cobalt oxide (e.g., Li(Ni_{0.6}Mn_{0.2}Co_{0.2})O₂, Li(Ni_{0.5}Mn_{0.3}Co_{0.2})O₂, or Li(Ni_{0.8}Mn_{0.1}Co_{0.1})O₂, etc.), or a lithium nickel cobalt aluminum oxide (e.g., LiNi_{0.8}Co_{0.15}Al_{0.05}O₂, etc.), and the like. When considering an remarkable improvement effect according to the control of type and content ratio of constituent elements forming a lithium composite metal oxide, the lithium composite metal oxide may be Li(Ni_{0.6}Mn_{0.2}C_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂, and the like, and any one thereof or a mixture of two or more thereof may be used.

Examples of the negative electrode active material may include one or two or more kinds of negative active materials selected from the group consisting of natural graphite, artificial graphite, a carbonaceous material; a metal (Me) such as a lithium-containing titanium composite oxide (LTO), Si, Sn, Li, Zn, Mg, Cd, Ce, Ni or FE; an alloy composed of the metals (Me); an oxide (MeOx) of the metal (Me); and a composite of the metal (Me) and carbon.

The electrode active material may be included in an amount of 60 parts by weight to 98 parts by weight, preferably 70 parts by weight to 98 parts by weight, more preferably 80 parts by weight to 98 parts by weight based on 100 parts by weight of the solid content of the electrode active material layer. When the electrode active material is included in the above range, the capacity of the lithium secondary battery may be maintained above a predetermined level.

Meanwhile, the electrode active material layer may further include an electrode binder, an electrode conductive material, and the like.

The electrode binder is a component for assisting in bonding between the electrode active material and a compound such as a conductive material, and bonding between a current collector and an active material layer. Specifically, examples of the electrode binder may include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene (PE), polypropylene, an ethylene-propylene-diene monomer (EPDM), a sulfonated EPDM, styrene-butadiene rubber, nitrile-butadiene rubber, fluorine rubber, various copolymers thereof, and the like. Typically, the electrode binder may be included in an amount of 1 part by weight to 20 parts by weight, preferably 1 parts by weight to 15 parts by weight, more preferably 1 parts by weight to 10 parts by weight based on 100 parts by weight of the electrode active material layer.

The electrode conductive material is a component for further improving the conductivity of the electrode active material. The electrode conductive material is not particularly limited as long as it has conductivity without causing a chemical change in the battery. For example, graphite; a carbon-based material such as carbon black, acetylene black, Ketjen black, channel black, furnace black, lamp black, and thermal black; a conductive fiber such as carbon fiber and metal fiber; metal powder such as fluorocarbon powder, aluminum powder, and nickel powder; a conductive whisker such as zinc oxide and potassium titanate; a conductive metal oxide such as titanium oxide; or a conductive material such as a polyphenylene derivative, and the like may be used. Specific examples of a commercially available conductive material may include acetylene black series (products of Chevron Chemical Company), Denka black (product of Denka Singapore Private Limited, Gulf Oil Company, etc.,), Ketjen black, EC series (product of Armak Company), Vulcan XC-72 (product of Cabot Company), and Super P (product of Timcal company). The electrode conductive material may be included in an amount of 1 part by weight to 20 parts by weight, preferably 1 parts by weight to 15 parts by weight, more preferably 1 parts by weight to 10 parts by weight based on 100 parts by weight of the electrode active material layer.

Next, the coating layer will be described. The coating layer is formed on the electrode active material layer and includes a first binder bonded to a gel polymer electrolyte. When a binder bonded to the gel polymer electrolyte is used as described above, the adhesion between an electrode and an electrolyte is improved, so that interface properties are excellent.

As the first binder, typical organic binders well known in the art, for example, binders in which poly(vinylidene fluoride) (PVdF), a copolymer of poly(vinylidene fluoride) and hexafluoropropylene (PVdF-co-HFP), or the like is substituted with a functional group capable of binding to the gel polymer electrolyte may be used.

More specifically, the first binder may include a main chain composed of a unit including at least one selected from the group consisting of an alkylene group having 1 to 5 carbon atoms in which at least one halogen atom (F, Cl, Br, I) is substituted, an alkylene oxide group having 1 to 5 carbon atoms, an imide group, and celluloid.

At this time, a different kind of functional group may be substituted in the main chain composed of the unit, depending on the kind of oligomer used for forming the gel polymer electrolyte.

The oligomer and the binder include an epoxy group, a functional group capable of ring-opening reaction with an epoxy group, or a combination thereof.

Meanwhile, the degree of substitution may be calculated in mol%, and the number or position of functional groups to be attached is not specified. The binder substituted with an epoxy group, a functional group capable of ring-opening reaction with an epoxy group, or a combination thereof will be described in more detail below.

Meanwhile, the coating layer may include only the first binder, or may selectively further include the electrode active material and/or the electrode conductive material listed above.

Next, as a separator for insulating the electrodes between the positive electrode and the negative electrode, a commonly known polyolefin-based separator such as polypropylene, polyethylene and the like may be used, or a composite separator having an organic, inorganic composite layer formed on an olefin-based substrate may be used, but the embodiment of the present invention is not particularly limited thereto.

Next, the gel polymer electrolyte of the present invention will be described. The gel polymer electrolyte is formed by polymerizing at least one oligomer including an epoxy group, a functional group capable of ring-opening reaction with an epoxy group, or a combination thereof.

The oligomer includes an epoxy group, a functional group capable of ring-opening reaction with an epoxy group, or a combination thereof. The functional group capable of ring-opening reaction with an epoxy group is selected from the group consisting of a hydroxyl group (OH), a carboxylic acid group (COOH), an amine group, an isocyanate group, a mercaptan group and an imide group. At this time, the oligomer will be described in more detail below.

Meanwhile, the composition for gel polymer electrolyte may include a lithium salt and a non-aqueous organic solvent in addition to the oligomer.

Any lithium salt may be used without particular limitation as long as it is typically used in an electrolyte for a lithium secondary battery. For example, the lithium salt may include Li⁺ as positive ions, and may include at least one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (F₂SO₂)₂N⁻, CF₃CF₂(CF₃)₂CO⁻, (CF₃SO₂)₂CH⁻, CF₃(CF₂)₇SO₃⁻, CF₃CO₂⁻, CH₃CO₂⁻, SCN⁻, and (CF₃CF₂SO₂)₂N⁻ as negative ions. The lithium salt may include a single material or a mixture of two or more materials, when needed. The content of the lithium salt may be appropriately changed within a range that is typically usable. However, in order to obtain an optimum effect of forming an anti-corrosive coating on the surface of an electrode, the lithium salt may be included in the electrolyte at a concentration of 0.8 M to 2 M, specifically 0.8 M to 1.5 M. However, the concentration of the lithium salt is not limited to the above range, and the lithium salt may be included at a high concentration of 2 M or higher depending on other components in the composition for a gel polymer electrolyte.

Any non-aqueous organic solvents typically used in an electrolyte for lithium secondary battery may be used without limitation as the non-aqueous organic solvent. For example, an ether compound, an ester compound, an amide compound, a linear carbonate compound, or a cyclic carbonate compound may be used alone or in combination of two or more thereof. Among the above, typical examples may include a cyclic carbonate compound, a linear carbonate compound, or a mixture thereof.

Specific examples of the cyclic carbonate compound may include any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and fluoroethylene carbonate (FEC), or a mixture of two or more thereof. Also, specific examples of the linear carbonate compound may include any one selected from the group consisting of dimethyl carbonate (DMC), diethyl carbonate (DEC), dipropyl carbonate, ethyl methyl carbonate (EMC), methyl propyl carbonate, and ethyl propyl carbonate, or a mixture of two or more thereof, but are not limited thereto.

Specifically, among the carbonate-based organic solvents, a cyclic carbonate such as ethylene carbonate and propylene carbonate which are organic solvents having high viscosity and high dielectric constant, thereby dissociating a lithium salt in an electrolyte well, may be used. When a linear carbonate such as dimethyl carbonate and diethyl carbonate having low viscosity and low dielectric constant is mixed with such cyclic carbonate in an appropriate ratio and used, an electrolyte having high electrical conductivity may be prepared.

Also, among the non-aqueous organic solvents, the ether compound may be any one selected from the group consisting of dimethyl ether, diethyl ether, dipropyl ether, methyl ethyl ether, methyl propyl ether, and ethyl propyl ether, or a mixture of two or more thereof, but is not limited thereto.

Also, among the non-aqueous organic solvents, the ester compound may be any one selected from the group consisting linear esters such as methyl acetate, ethyl acetate, propyl acetate, methyl propionate, ethyl propionate, propyl propionate, and butyl propionate; and cyclic esters such as γ-butyrolactone, γ-valerolactone, γ-caprolactone, σ-valerolactone, and ε-caprolactone, or a mixture of two or more thereof, but is not limited thereto.

An oligomer represented by Formula 2 and/or Formula 3 is polymerized not by a radical polymerization reaction but by an (epoxy) condensation polymerization reaction, so that a polymerization reaction is performed successively without a polymerization initiator.

The gel polymer electrolyte is formed by a thermal polymerization reaction using an epoxy ring-opening reaction by including an epoxy group, a functional group capable of ring-opening reaction with an epoxy group, or a combination thereof as the oligomer, even without a thermal/photo polymerization initiator, when heat is applied. The epoxy ring-opening reaction is performed to polymerize the oligomer, thereby forming the gel polymer electrolyte.

Meanwhile, when the oligomer is thermally polymerized, a functional group of the binder may be subjected to an epoxy ring-opening reaction with a functional group of the oligomer, so that the binder may be bonded to the oligomer.

Accordingly, even without using a polymerization initiator, the composition for gel polymer electrolyte is cured to form a gel polymer electrolyte, and a binder on the coating layer included in the electrode is bonded at the same time, so that the adhesion between the electrode and the gel polymer electrolyte may be improved.

The gel polymer electrolyte is formed by polymerizing an oligomer, and the oligomer includes an epoxy group, a functional group capable of ring-opening reaction with an epoxy group, or a combination thereof.

When the oligomer including a functional group is used, the oligomer may be thermally polymerized through an epoxy ring-opening reaction between oligomers, and may also be bonded to an organic binder included in the electrode active material layer through an epoxy ring-opening reaction.

Typically, a gel polymer electrolyte is formed by using an oligomer subjected to a polymerization reaction through a radical polymerization reaction. When such an oligomer is used, a polymerization initiator is required for the polymerization reaction. However, an azo-based compound, a peroxide-based compound, or the like which is used as a radical polymerization initiator has a problem of causing the generation of gas inside a battery during a curing reaction, thereby deteriorating the safety of the battery.

Meanwhile, an oligomer used in the gel polymer electrolyte of the present invention is an oligomer polymerized through an epoxy ring-opening reaction among the oligomers listed above, so that it is possible to perform a polymerization reaction without using a polymerization initiator which is typically used for polymerizing an oligomer. Accordingly, since gas is not generated inside a battery during curing through a polymerization reaction, a swelling phenomenon of the battery and a battery short circuit phenomenon caused thereby are prevented in advance, so that the safety of the battery may be improved.

Specifically, the oligomer includes at least one unit selected from the group consisting of a unit containing an alkylene oxide group and a unit containing an amine group, and a main chain composed of the unit may be substituted with an epoxy group, a functional group capable of ring-opening reaction with an epoxy group, or a combination thereof.

For example, the oligomer may include at least one compound selected from the group consisting of compounds represented by Formula 2 and Formula 3 below.

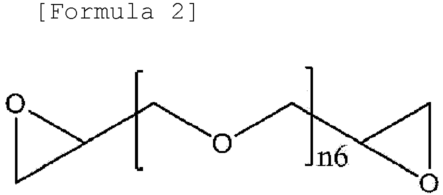

In Formula 2, n6 is an integer of 2 to 10,000, preferably an integer of 2 to 7,500, and more preferably an integer of 2 to 5,000.

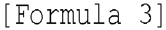

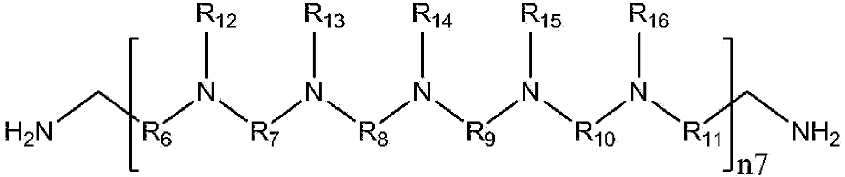

In Formula 3, R₆ to R₁₁ are substituted or unsubstituted alkylene groups having 1 to 5 carbon atoms. R₁₂ to R₁₆ are each independently at least one selected from the group consisting of hydrogen (H), a substituted or unsubstituted alkyl group having 1 to 10 carbon atoms, and - NR₁₇R₁₈ and -R₁₉NR₂₀R₂₁. R₁₉ is a substituted or unsubstituted alkylene group having 1 to 5 carbon atoms. R₁₇, R₁₈, R₂₀, and R₂₁ are each independently hydrogen (H), a substituted or unsubstituted alkyl group having 1 to 5 carbon atoms, or - R₂₂NH₂. R₂₂ is a substituted or unsubstituted alkylene group having 1 to 5 carbon atoms, and n7 is an integer of 1 to 10,000, preferably an integer of 1 to 7,500, and more preferably an integer of 1 to 5,000.

Meanwhile, when the oligomer includes both a compound represented by Formula 2 and a compound represented by Formula 3, the compound represented by Formula 2 and the compound represented by Formula 3 may be mixed in a weight ratio of (30 to 100) : (0 to 70), preferably (40 to 95) : (5 to 60). When the oligomer is mixed and used in the above weight ratio, the mechanical properties of a polymer formed by the oligomer are improved, so that the leakage of the gel polymer electrolyte may be prevented, and the adhesion to the electrode may be improved.

More specifically, the compound represented by Formula 3 may include at least one compound selected from the group consisting of compounds represented by Formula 3-1 to Formula 3-3 below.

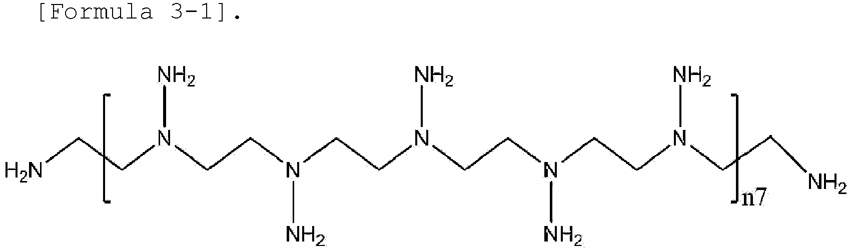

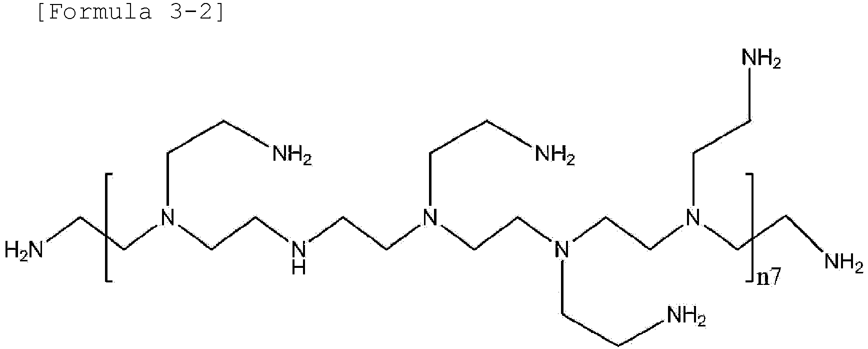

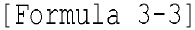

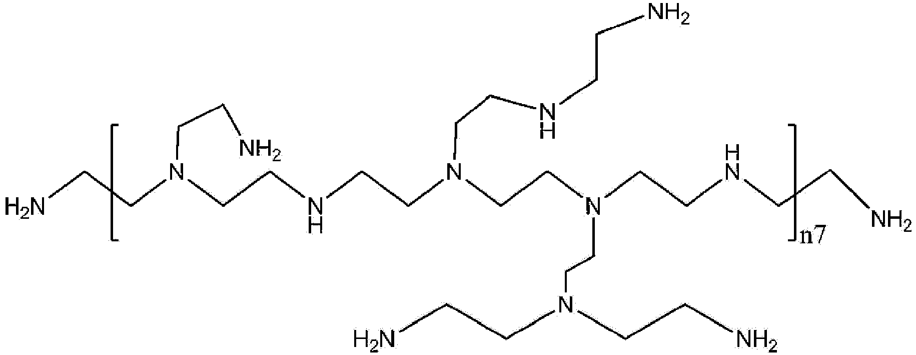

In Formula 3-1 to Formula 3-3, n7 is an integer of 1 to 10, 000. Meanwhile, n7 may be preferably an integer of 1 to 10,000, more preferably an integer of 1 to 7,500.

The weight average molecular weight (Mw) of an oligomer represented by Formula 2 or Formula 3 may be about 100 to 1,000,000. Preferably, the weight average molecular weight (Mw) may be 100 to 900,000, more preferably, 300 to 800,000. When the oligomer has a weight average molecular weight in the above range, the gel polymer electrolyte formed by curing is stably formed, so that the mechanical performance in the battery is improved, thereby suppressing the generation of heat and ignition which may occur due to an external impact of the battery and preventing explosion which may occur due to the generation of heat and ignition. In addition, the leakage and volatilization of the gel polymer electrolyte may be prevented so that the high-temperature safety of the lithium secondary battery may be greatly improved. Meanwhile, the composition for gel polymer electrolyte may further include a lithium salt and a non-aqueous organic solvent in addition to the oligomer. The descriptions of the lithium salt and the non-aqueous organic solvent are the same as those described above, and thus, detailed descriptions thereof will be omitted.

### <Manufacturing method of lithium secondary battery>

A method for manufacturing a lithium secondary battery according to the present invention will be described.

First, a method for manufacturing a lithium secondary battery including a first binder on a coating layer formed on an electrode active material layer will be described.

The method for manufacturing the lithium secondary battery includes (1) inserting an electrode assembly composed of a positive electrode, a negative electrode, and a separator interposed between the positive electrode and the negative electrode into a battery case, and (2) injecting a gel polymer electrolyte composition including an oligomer into the battery case and then polymerizing the gel polymer electrolyte. Meanwhile, provided is a method for manufacturing a lithium secondary battery in which one electrode selected from the positive electrode and the negative electrode includes an electrode current collector, an electrode active material layer formed on the electrode current collector, and a coating layer formed on the electrode active material layer and including a first binder, and the first binder is bonded to a gel polymer electrolyte.

### (1) Inserting electrode assembly

First, an electrode assembly including a positive electrode, a negative electrode, and a separator is prepared. Thereafter, the electrode assembly is prepared by interposing the separator between the positive electrode and the negative electrode. At this time, the prepared electrode assembly is inserted into a battery case. Various battery cases used in the art may be used as the battery case without limitation. For example, a battery case of a cylindrical shape, a quadrangular shape, a pouch shape, a coin shape, or the like may be used. The descriptions of the configurations of the positive electrode, the negative electrode, and the separator are the same as those described above, and thus, detailed descriptions thereof will be omitted.

### (2) Injecting gel polymer electrolyte composition and then polymerizing the gel polymer electrolyte

Next, a composition for gel polymer electrolyte including an oligomer is injected into the battery case into which the electrode assembly is inserted, and then polymerized.

At this time, the type of polymerization reaction varies depending on the type of oligomer forming the gel polymer electrolyte. When the oligomer is an oligomer including a (meth)acrylate group, the gel polymer electrolyte is formed through a radical polymerization reaction. At this time, the polymerization reaction may be performed through a thermal polymerization reaction or a photopolymerization reaction, and more specifically, may be performed by E-BEAM, gamma ray or room temperature/high-temperature aging.

Meanwhile, when the oligomer is an oligomer including an epoxy group, a functional group capable of ring-opening reaction with an epoxy group, or a combination thereof and the gel polymer electrolyte is formed through an epoxy ring-opening reaction, the polymerization may be performed through a thermal polymerization reaction. In addition, even without a thermal/photo-polymerization initiator, when heat is applied, the epoxy ring-opening reaction is performed to polymerize the oligomer, thereby forming the gel polymer electrolyte. Meanwhile, when the oligomer is thermally polymerized, a functional group of the binder may be subjected to an epoxy ring-opening reaction with a functional group of the oligomer, so that the binder may be bonded to the oligomer.

Accordingly, even without using a polymerization initiator, the composition for gel polymer electrolyte is cured to form a gel polymer electrolyte, and the binder on the coating layer of the electrode is bonded at the same time, so that the adhesion between the electrode and the gel polymer electrolyte may be improved.

### MODE FOR CARRYING OUT THE INVENTION

Hereinafter, the present invention will be described in more detail with reference to specific examples. However, the following examples are merely illustrative of the present invention and are not intended to limit the scope of the present invention.

### [Examples]

### 1. Reference Example 1 (not in accordance with the invention)

### (1) Preparing binder

In a nitrogen atmosphere, vinylidene fluoride (VDF) as a monomer, diisopropyl peroxydicarbonate as a free radical initiator, and 1,1,2-trichlorotrifluoroethane as a solvent were introduced into a reactor cooled to -15°C. Thereafter, while maintaining the temperature at 45°C to initiate polymerization, a polymerization reaction was performed by stirring the reactant at 200 rpm to polymerize polyvinylidene fluoride (hereinafter referred to as PVdF) (weight average molecular weight: 50, 000). Thereafter, 10 hours later, NaCl was introduced to terminate the polymerization reaction by substituting Cl at an end of the polymerized PVdF, and monomers which did not participated in the polymerization reaction were discharged.

The polymerized PVdF was dispersed in N-methyl-2-pyrrolidone (NMP) which is a solvent, and then acryl acid was introduced thereto at a molar ratio of 1:1.1 based on the polymerized PVdF, and stirred at 200 rpm in the presence of NaOH while maintaining the temperature at 45°C. Thereafter, 10 hours later, a drying process was performed at 120°C to obtain PVdF as a first binder in which Cl at the end thereof is substituted with an acryloxy group.

### (2) Manufacturing lithium secondary battery

### 1) Manufacturing positive electrode

97 wt% of Li(Ni_{0.8}Mn_{0.1}Co_{0.1})O₂ as a positive electrode active material, 2 wt% of carbon black as a conductive material, and 1 wt% of PVDF as a binder were added to N-methyl-2-pyrrolidone (NMP) which is a solvent to prepare a positive electrode active material layer composition. The positive electrode active material layer composition was applied on an aluminum (Al) thin film having a thickness of about 20 µm, which is a positive electrode current collector, and then dried to form a positive electrode active material layer having a thickness of 100 um. Thereafter, 95 wt% of Li(Ni_{0.8}Mn_{0,1}Co_{0.1})O₂ as a positive electrode active material, 1 wt% of carbon black as a conductive material, and 4 wt% of PVDF substituted with an acryloxy group as a first binder were added to N-methyl-2-pyrrolidone(NMP) which is a solvent to prepare a coating layer composition. The coating layer composition was applied on the positive electrode active material layer and then dried to form a coating layer having a thickness of 10 um, and the coating layer was roll pressed to manufacture a positive electrode.

### 2) Manufacturing negative electrode

97 wt% of carbon powder as a negative electrode active material, 1 wt% of carboxymethylcellulose (CMC) as a negative electrode binder, 1 wt% of styrene butadiene rubber (SBR), and 1 wt% of carbon black as a conductive material were added to N-methyl-2-pyrrolidone (NMP) which is a solvent to prepare a negative electrode active material layer composition. The negative electrode active material layer composition was applied on a copper (Cu) thin film having a thickness of about 10 µm, which is a negative electrode current collector, dried and then roll pressed to manufacture a negative electrode.

### 3) Preparing gel polymer electrolyte composition

94.99 g of a non-aqueous organic solvent in which 1 M of LiPF₆ is dissolved (ethylene carbonate (hereinafter, EC):ethyl methyl carbonate (hereinafter, EMC) = 3:7 volume ratio) was added with 5 g of an oligomer (n1=3) represented by Formula 1-1 and 0.02 g of dimethyl 2,2'-azobis(2-methylpropionate) (CAS No. 2589-57-3), which is a polymerization initiator, to prepare a gel polymer electrolyte composition.

### 4) Manufacturing lithium secondary battery

The positive electrode and the negative electrode manufactured above, and a separator composed of three layers of polypropylene/polyethylene/polypropylene (PP/PE/PP) were sequentially laminated to manufacture an electrode assembly. Thereafter, the electrode assembly was received in a battery case, injected with the gel polymer electrolyte composition and then stored for 2 days at room temperature, following by heating for 5 hours at 75°C to manufacture a lithium secondary battery having a gel polymer electrolyte thermally polymerized.

### 4. Example 1

### (1) Manufacturing positive electrode

A positive electrode was manufactured in the same manner as in Reference Example 1 except that when manufacturing a positive electrode, in the step of forming a coating layer, 4 wt% of PVdF (weight average molecular weight: 50,000) substituted with 0.5 mol% of epoxy group was included as a first binder instead of PVdF substituted with an acryloxy group to prepare a coating layer composition.

### (2) Manufacturing negative electrode

97 wt% of carbon powder as a negative electrode active material, 1 wt% of carboxymethylcellulose (CMC) as a binder, 1 wt% of styrene butadiene rubber (SBR), and 1 wt% of carbon black as a conductive material were added to N-methyl-2-pyrrolidone (NMP) which is a solvent to prepare a negative electrode active material layer composition. The negative electrode active material layer composition was applied on a copper (Cu) thin film having a thickness of about 10 µm, which is a negative electrode current collector, dried and then roll pressed to manufacture a negative electrode.

### (3) Preparing gel polymer electrolyte composition

95 g of a non-aqueous organic solvent in which 1 M of LiPF₆ is dissolved (EC:EMC = 3:7 volume ratio) was added with 5 g of a compound in which a compound (weight average molecular weight (Mw) = 500) represented by Formula 2 and a compound (weight average molecular weight (Mw) = 10,000) represented by Formula 3-3 were mixed in a weight ratio of 7:3 to prepare a gel polymer electrolyte composition.

### (4) Manufacturing lithium secondary battery

The positive electrode and the negative electrode manufactured above, and a separator composed of three layers of polypropylene/polyethylene/polypropylene (PP/PE/PP) were sequentially laminated to manufacture an electrode assembly. Thereafter, the electrode assembly was received in a battery case, injected with the gel polymer electrolyte composition and then stored for 2 days at room temperature, following by heating for 24 hours at 75°C to manufacture a lithium secondary battery having a gel polymer electrolyte thermally polymerized.

### 5. Example 2

A lithium secondary battery was manufactured in the same manner as in Example 1 except that when manufacturing a positive electrode, in the step of forming a coating layer, 4 wt% of PVdF-co-HFP (weight average molecular weight:100,000) substituted with 0.5 mol% of epoxy group was included as a binder instead of PVdF (weight average molecular weight:50,000) substituted with 0.5 mol% of epoxy group to prepare a coating layer composition.

### [Comparative Examples]

### 1. Comparative Example 1

In Reference Example 1, a positive electrode without a coating layer was used, and as an electrolyte, a liquid electrolyte which is a non-aqueous organic solvent in which 1 M of LiPF₆ is dissolved (EC:EMC = 3:7 volume ratio) was used. Then, the positive electrode and the negative electrode, and a separator composed of three layers of polypropylene/polyethylene/polypropylene (PP/PE/PP) were sequentially laminated to manufacture an electrode assembly. Thereafter, the electrode assembly was received in a battery case, injected with the electrolyte and then stored for 2 days at room temperature to manufacture a lithium secondary battery.

### 2. Comparative Example 2

A lithium secondary battery was manufactured in the same manner as in Reference Example 1 except that a positive electrode without a coating layer was used.

### 3. Comparative Example 3

A lithium secondary battery was manufactured in the same manner as in Example 1 except that a positive electrode without a coating layer was used.

### [Experimental Examples]

### 1. Experimental Example 1: Initial capacity measurement test

The lithium secondary battery according to each of Reference Example 1, Examples 1 and 2, and Comparative Examples 1 to 3 was respectively subjected to formation at a current of 200 mA (0.1 C rate) . Thereafter, 4.2 V, 666 mA (0.3 C, 0.05 C cut-off) CC/CV charge and 3 V, 666 mA (0.3 C) CC discharge were repeated 3 times, and the measured third discharge capacity was evaluated as an initial capacity. The results are shown in Table 1.

**[Table 1]**

| | Initial capacity (Ah) |
|---|---|
| Reference Example 1 | 2.2 |
| Example 1 | 2.2 |
| Example 2 | 2.0 |
| Comparative Example 1 | 1.9 |
| Comparative Example 2 | 1.8 |
| Comparative Example 3 | 1.7 |

Referring to Table 1, the lithium secondary batteries according to Examples have more excellent adhesion between the gel polymer electrolyte and the electrode than the lithium secondary batteries according to Comparative Examples, so that the interface resistance thereof is reduced, and thus, the initial capacity thereof is higher.

### 3. Experimental Example 3: High-temperature lifespan evaluation (capacity retention rate evaluation)

The lithium secondary battery according to each of Examples and Comparative Examples was respectively subjected to formation at a current of 200 mA (0.1 C rate). Thereafter, 4.2 V, 666 mA (0.3 C, 0.05 C cut-off) CC/CV charge and 3 V, 666 mA (0.3 C) CC discharge were repeated 50 times at a high temperature of 45°C, and the capacity retention rate was calculated by comparing the capacity of the lithium secondary battery in the 50^{th} discharged state (after 50 cycles) with the capacity of the lithium secondary battery which was subjected to an initial formation and then charged with 4.2 V, 666 mA (0.3 C, 0.05 C cut-off) CC/CV once and discharged with 3 V 666 mA (0.33 C) CC once. The results are shown in Table 3 below.

**[Table 3]**

| | Capacity retention rate after 50^{th} cycle (%) |
|---|---|
| Reference Example 1 | 92 |
| Example 1 | 93 |
| Example 2 | 94 |
| Comparative Example 1 | 78 |
| Comparative Example 2 | 84 |
| Comparative Example 3 | 82 |

Referring to Table 3, in the case of the lithium secondary batteries according to Examples, the gel polymer electrolyte is uniformly formed on the surface of the electrode so that the interface properties thereof are excellent, and thus, an additional deterioration reaction of the gel polymer electrolyte is suppressed. Therefore, it can be confirmed that the capacity retention rate thereof at a high temperature is improved compared to that of the lithium secondary batteries according to Comparative Examples.

### 4. Experimental Example 4: High-temperature safety evaluation (HOT box test)

The lithium secondary battery manufactured in each of Reference Example 1, Examples 1 and 2, and Comparative Examples 1 to 3 was fully charged with 100% of state of charge (SOC), and then left for
4 hours at 150°C to perform a test to confirm whether or not ignition occurred and the time at which the ignition started when the ignition occurred. The results are shown in Table 4 below

**[Table 4]**

| | Ignition or no ignition | Ignition start time (min.) |
|---|---|---|
| Reference Example 1 | X | - |
| Example 1 | X | - |
| Example 2 | O | 130 |
| Comparative Example 1 | O | 5< |
| Comparative Example 2 | O | 10 |
| Comparative Example 3 | O | 10 |

In Table 4, X represents a case in which ignition did not occur during the storage at 150°C , and O represents a case in which ignition occurred during the storage at 150°C.

Referring to Table 4, the lithium secondary batteries of Examples 1 and 2 have excellent electrode interface stability even stored at a high-temperature in a fully charged state, so that the exothermic reaction and the thermal runaway phenomenon are suppressed, and thus, ignition does not occur.

Therefore, it can be confirmed that the high-temperature safety thereof is more excellent than the lithium secondary batteries of Comparative Examples which ignited within 10 minutes.

## Claims

1. A lithium secondary battery comprising:
a positive electrode, a negative electrode, and a separator interposed between the positive electrode and the negative electrode; and
a gel polymer electrolyte formed by polymerizing an oligomer,
wherein:
(i) the positive and/or the negative electrode includes an electrode current collector, an electrode active material layer formed on the electrode current collector, and a coating layer formed on the electrode active material layer including a binder bonded to the gel polymer electrolyte, and
(ii) the oligomer and the binder comprise an epoxy group, a functional group capable of ring-opening reaction with an epoxy group, or a combination thereof, the functional group being at least one of a hydroxyl group (-OH), a carboxylic acid group (-COOH), an amine group, an isocyanate group, a mercaptan group and an imide group.

2. A method for manufacturing a lithium secondary battery comprising:
inserting, into a battery case, an electrode assembly composed of a positive electrode, a negative electrode, and a separator interposed between the positive electrode and the negative electrode;
injecting a gel polymer electrolyte composition including a polymerizable oligomer into the battery case, the oligomer including an epoxy group, a functional group capable of ring-opening reaction with an epoxy group, or a combination thereof, the gel polymer electrolyte composition not comprising a polymerization initiator; and
polymerizing the gel polymer electrolyte,
wherein the positive and/or the negative electrode includes an electrode current collector, an electrode active material layer formed on the electrode current collector, and a coating layer formed on the electrode active material layer and including a binder which bonds with the gel polymer electrolyte during the polymerisation of the latter.

## Patentansprüche

1. Lithiumsekundärbatterie, umfassend:
eine positive Elektrode, eine negative Elektrode und
einen Separator, der zwischen der positiven Elektrode und der negativen Elektrode eingefügt ist, und
einen Gel-Polymer-Elektrolyten, der durch Polymerisieren eines Oligomers gebildet ist,
wobei
(i) die positive und/oder die negative Elektrode einen Elektrodenstromabnehmer, eine auf dem Elektrodenstromabnehmer gebildete Elektrodenaktivmaterialschicht und eine auf der Elektrodenaktivmaterialschicht gebildete Beschichtungsschicht, enthaltend ein an dem Gel-Polymer-Elektrolyten gebundenes Bindemittel, einschließt und
(ii) das Oligomer und das Bindemittel eine Epoxygruppe, eine funktionelle Gruppe, die für eine Ringöffnungsreaktion mit einer Epoxygruppe geeignet ist, oder eine Kombination davon umfassen, wobei die funktionelle Gruppe mindestens eine von einer Hydroxylgruppe (-OH), einer Carbonsäuregruppe (-COOH), einer Amingruppe, einer Isocyanatgruppe, einer Mercaptangruppe und einer Imidgruppe ist.

2. Verfahren zur Herstellung einer Lithiumsekundärbatterie, umfassend:
Einfügen einer Elektrodenanordnung, die aus einer positiven Elektrode, einer negativen Elektrode und einem Separator, der zwischen der positiven Elektrode und der negativen Elektrode eingefügt ist, zusammengesetzt ist, in ein Batteriegehäuse,
Einspritzen einer Gel-Polymer-Elektrolytzusammensetzung, die ein polymerisierbares Oligomer einschließt, in das Batteriegehäuse, wobei das Oligomer eine Epoxygruppe, eine funktionelle Gruppe, die für eine Ringöffnungsreaktion mit einer Epoxygruppe geeignet ist, oder eine Kombination davon einschließt, wobei die Gel-Polymer-Elektrolytzusammensetzung keinen Polymerisationsinitiator umfasst, und
Polymerisieren des Gel-Polymer-Elektrolyten,
wobei die positive und/oder die negative Elektrode einen Elektrodenstromabnehmer, eine auf den Elektrodenstromabnehmer gebildete Elektrodenaktivmaterialschicht und eine Beschichtungsschicht einschließt, die auf der Elektrodenaktivmaterialschicht gebildet ist und ein Bindemittel einschließt, das mit dem Elektrolyten während der Polymerisation von Letzterem verbunden ist.

## Revendications

1. Batterie secondaire au lithium comprenant :
une électrode positive, une électrode négative et un séparateur interposé entre l'électrode positive et l'électrode négative ; et
un électrolyte polymère en gel formé par polymérisation d'un oligomère,
dans laquelle :
(i) l'électrode positive et/ou l'électrode négative incluent un collecteur de courant d'électrode, une couche de matériau actif d'électrode formée sur le collecteur de courant d'électrode, et une couche de revêtement formée sur la couche de matériau actif d'électrode incluant un liant lié à l'électrolyte polymère en gel, et
(ii) l'oligomère et le liant comprennent un groupe époxy, un groupe fonctionnel apte à une réaction d'ouverture de cycle avec un groupe époxy, ou une combinaison de ceux-ci, le groupe fonctionnel étant au moins l'un parmi un groupe hydroxyle (-OH), un groupe acide carboxylique (-COOH), un groupe amine, un groupe isocyanate, un groupe mercaptan et un groupe imide.

2. Procédé de fabrication d'une batterie secondaire au lithium comprenant :
l'insertion, dans un boîtier de batterie, d'un ensemble électrode composé d'une électrode positive, d'une électrode négative et d'un séparateur interposé entre l'électrode positive et l'électrode négative ;
l'injection d'une composition d'électrolyte polymère en gel incluant un oligomère polymérisable dans le boîtier de batterie, l'oligomère incluant un groupe époxy, un groupe fonctionnel apte à une réaction d'ouverture de cycle avec un groupe époxy, ou une combinaison de ceux-ci, la composition d'électrolyte polymère en gel ne comprenant pas d'initiateur de polymérisation ; et
la polymérisation de l'électrolyte polymère en gel,
dans lequel l'électrode positive et/ou l'électrode négative incluent un collecteur de courant d'électrode, une couche de matériau actif d'électrode formée sur le collecteur de courant d'électrode, et une couche de revêtement formée sur la couche de matériau actif d'électrode et incluant un liant qui se lie avec l'électrolyte polymère en gel pendant la polymérisation de ce dernier.
